# EUROPEAN PATENT SPECIFICATION

(11) **EP 4 077 533 B1**
(45) Date of publication and mention of the grant of the patent: **27.08.2025**
(21) Application number: 20834045.5
(22) Date of filing: 07.12.2020
(51) Int. Cl.: C08L 23/08

(54) **HALOGEN FREE FLAME RETARDANT POLYMERIC COMPOSITIONS**
HALOGENFREIE FLAMMHEMMENDE POLYMERZUSAMMENSETZUNGEN
COMPOSITIONS POLYMÈRES IGNIFUGEANTES EXEMPTES D'HALOGÈNE

(30) Priority: 18.12.2019 US 201962949535 P
(43) Date of publication of application: 26.10.2022
(73) Proprietor: Dow Global Technologies LLC, Midland, MI 48674 (US)
(72) Inventor: JELTSCH, Krischan, 8810 Horgen (CH); CREE, Stephen H., 8810 Horgen (CH)
(74) Representative: Boult Wade Tennant LLP
(86) International application number: PCT/US2020/063570
(87) International publication number: WO 2021/126573

(56) References cited:
- EP-A1- 3 058 027
- US-B2- 10 366 807

## Description

### BACKGROUND

### Field of the invention

The present disclosure generally relates to polymeric compositions and more specifically to compatibilized polymeric compositions including hydrated mineral fillers.

### Introduction

Polyolefin based halogen free flame retardant (HFFR) cable jacket compositions are useful for a variety of applications where flame retardancy of the insulation/jacketing material is important. Flame retardancy is achieved through the addition of hydrated mineral fillers that dilute the concentration of flammable polymer material and decompose below the degradation temperature of the polymer when exposed to heat. The decomposition of the hydrated mineral filler releases water thereby removing heat from the fire source. Traditional HFFR cable jacket compositions are used indoors, in buildings, trains, cars, or wherever people may be present.

The use of hydrated mineral fillers in polyolefin wire and cable formulations suffers from a number of drawbacks, the majority of which stem from the relatively high level of filler necessary to meet fire retardant specifications. Filler loadings of 60 weight percent (wt%) or 65 wt% in polyolefins are not uncommon. This loading of filler affects HFFR cable jacket composition properties and leads to compounds with a high density, limited flexibility and decreased mechanical properties such as elongation at break.

Blends of different polymers often must be used to allow incorporation of such high filler loadings while maintaining some mechanical properties. For example, polypropylene is often utilized to add strength of the cable jacket compositions while polyolefin elastomers allow for filler loading. Compatibilizers are used in systems where different polymers are blended together to increase mixing and adhesion of the polymers. For example, WO2017100175 utilizes an ethylenepropylene diblock copolymer to compatibilize a propylene and high-density polyethylene (HDPE) system. However, given that the polymer phase of HFFR cable jackets is the minority phase, conventional attempts and understanding teach that compatibilization efforts should be directed to increasing compatibilization and adhesion between the polymer phase and the hydrated mineral filler. For example, US20100319960A1 discloses an HFFR, olefin multi-block interpolymer that utilizes a polar-monomer-based compatibilizer to couple the HFFR and the olefin multi-block interpolymer together. Still other multi-polymeric HFFR systems consider it an advantage to be free of polymer phase compatibilizers. For example, WO2011079457A1 explains that "[a]dvantageously, the present compositions do not require and, in embodiments, do not include a compatibilizer (e.g., functional polymer) between the PP and thermoplastic elastomer components." US 10 366 807 B2 refers to a resin composition for automotive cable material and cable using the same.

As the applications of HFFR cable jackets begin to expand into non-traditional areas, mechanical properties once not considered relevant for HFFR cable jackets are becoming relevant. For example, environmental stress cracking (ESCR) is a mechanical property relevant for cable jackets exposed to moisture (e.g., outdoor and/or underground cables), the lack of moisture (e.g., in desert environments) and wide temperature fluctuations. As a result, traditional properties for HFFR cable jackets such as "hot pressure" or "hot knife" indentation tests must be evaluated in addition to other properties such as ESCR, mechanical properties (e.g., tensile strength and elongation at break) and overall composition cost. Complicating this balancing of properties is the fact that often the improvement of one property comes at the detriment of another such that achieving an acceptable balance of properties remains elusive.

Accordingly, it would be surprising to discover a cable jacket composition having a HFFR content of 40 wt% or greater that exhibits an ESCR of greater than 1000 hours, a hot knife indentation of less than 50%, an elongation at break of greater than 70% and a tensile strength of 10 Mpa or greater.

### SUMMARY OF THE IINVENTION

The present invention offers a polymeric composition having an HFFR filler content of 40 wt% or greater that exhibits an ESCR of greater than 1000 hours, a hot knife indentation of less than 50%, an elongation at break of greater than 70% and a tensile strength of 10 Mpa or greater. The present invention is particularly useful for cable jackets.

The present invention is a result of discovering that despite the polymer phase being the minority phase in an HFFR cable composition, effective compatibilization of multiple different polymer types within the polymer phase is effective at providing a balance of properties necessary for critical environments. By utilizing a maleic anhydride grafted compatibilizer to compatibilize the polyolefin elastomer with the HFFR filler, the HFFR filler is bound to the polymeric phase. By using a crystalline block composite compatibilizer in a polypropylene and polyolefin elastomer polymeric phase of a HFFR cable jacket, the polyolefin elastomer is more effectively bound to the polypropylene phase. Surprisingly, rather than simply increasing a single property of the resulting composition, ESCR, tensile strength, elongation at break and hot knife indentation properties all improve. As result, the HFFR cable jacket of the present invention is capable of utilization in applications outside of conventional HFFR cable jackets.

The present invention is particularly useful for jackets of cables.

According to a first feature of the present disclosure, a polymeric composition comprises in weight percent of the polymeric composition: (a) 10 wt% to 30 wt% of a polyolefin elastomer; (b) 1 wt% to 20 wt% of a polypropylene-based polymer; (c) greater than 1 wt% to 20 wt% of a crystalline block composite; (d) 1 wt% to 10 wt% of a maleated polyolefin elastomer; and (e) 40 wt% to 80 wt% of a halogen free flame-retardant filler.

According to a second feature of the present disclosure, there is provided the cable of claim 10.

### DETAILED DESCRIPTION

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

All ranges include endpoints unless otherwise stated. Subscript values in polymer formulae refer to mole average number of units per molecule for the designated component of the polymer.

Test methods refer to the most recent test method as of the priority date of this document unless a date is indicated with the test method number as a hyphenated two-digit number. References to test methods contain both a reference to the testing society and the test method number. Test method organizations are referenced by one of the following abbreviations: ASTM refers to ASTM International (formerly known as American Society for Testing and Materials); EN refers to European Norm; DIN refers to Deutsches Institut für Normung; ISO refers to International Organization for Standards, and IEC refers to International Electrotechnical Commission.

As used herein, the term weight percent ("wt%") designates the percentage by weight a component is of a total weight of the polymeric composition unless otherwise specified.

As used herein, an "elastomer" is a rubber-like polymer that has an elastic modulus of about 68.95 MPa (10,000 psi) or less and an elongation greater than 200% in an uncrosslinked state at 23°C using the method of ASTM D638-72.

As used herein, the term "Halogen-free" means that an object or material contains 2000 mg/kg or less of halogen as measured by ion chromatography (IC). Halogen content of less than this amount is considered inconsequential to the efficacy of the composition as a wire or cable covering and hence can be referred to as "Halogen-free."

### Polymeric Composition

The polymeric composition of the present invention includes a polyolefin elastomer, a polypropylene-based polymer, a crystalline block composite, a maleated polyolefin elastomer; and a halogen free flame-retardant filler.

### Polyolefin Elastomer

The polyolefin elastomer is an elastomer that may comprise ethylene-based elastomers/plastomers, ethylene block copolymers and propylene-based elastomers.

The polyolefin elastomer may comprise an α-olefin block copolymer. "Olefin block copolymers," refer to a polymer comprising two or more chemically distinct regions or segments (referred to as "blocks") joined in a linear manner, that is, a polymer comprising chemically differentiated units which are joined end-to-end with respect to polymerized olefinic, preferable ethylenic, functionality, rather than in pendent or grafted fashion. The blocks differ in the amount or type of incorporated comonomer, density, degree of crystallinity, crystallite size attributable to a polymer of such composition, type or degree of tacticity (isotactic or syndiotactic), regio-regularity or regio-irregularity, degree of branching (including long chain branching or hyper-branching), homogeneity or any other chemical or physical property.

Suitable monomers for use in preparing the olefin block copolymer may include olefin or diolefin comonomers. Examples of suitable comonomers include straight-chain or branched α-olefins of 2 to 30. Suitable branched α-olefins my include ethylene, propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene; cycloolefins of 3 to 30, preferably 3 to 20 carbon atoms, such as cyclopentene, cycloheptene, norbornene, 5-methyl-2-norbornene, tetracyclododecene, and 2-methyl-1,4,5,8-dimethano-1,2,3,4,4a,5,8,8a-octahydronaphthalene; di- and poly-olefins, such as butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidene norbornene, vinyl norbornene, dicyclopentadiene, 7-methyl-1,6-octadiene, 4-ethylidene-8-methyl-1,7-nonadiene, and 5,9-dimethyl-1,4,8-decatriene.

Examples of olefin block copolymers useful in the practice of this invention as the polyolefin elastomer are commercially available as INFUSE^{™} D9100, D9500 D9507 or D9530 olefin block copolymers from The Dow Chemical Company, Midland, Michigan, USA.

The polyolefin elastomer may comprise an elastomeric ethylene homopolymer or an ethylene and α-olefin random copolymer. The α-olefins of the ethylene and α-olefin copolymer may have 3 to 12 carbon atoms and preferably 3 to 8 carbon atoms. Preferably the α-olefin is one or more of 1-butene, 1-hexene and 1-octene. The ethylene polymers used in the practice of this invention can comprise units derived from three or more different monomers. For example, a third comonomer can be another α-olefin or a diene such as ethylidene norbornene, butadiene, 1,4-hexadiene or a dicyclopentadiene.

Examples of ethylene polymers useful in the practice of this invention include homogeneously branched, linear ethylene/alpha-olefin copolymers such as TAFMER^{™} copolymer from Mitsui Petrochemicals Company Limited, New York, NY, USA and EXACT^{™} copolymer by Exxon Chemical Company. Examples of homogeneously branched, substantially linear ethylene and α-olefin polymers include AFFINITY^{™} plastomers, ENGAGE^{™} elastomers and SEC 39001 ethylene-butene copolymer available from The Dow Chemical Company, Midland, MI, USA. Resins of such polyolefin elastomers may be prepared with at least one metallocene catalyst or a blend of multiple elastomer resins may be prepared with different metallocene catalysts. In some embodiments, the elastomer is a substantially linear ethylene polymer (SLEP). SLEPs and other metallocene catalyzed elastomers are known in the art, for example, US 5,272,236.

The polyolefin elastomer can have a density of 0.86 grams per cubic centimeter (g/cc) or greater, or 0.87 g/cc or greater, or 0.88 g/cc or greater, or 0.89 g/cc or greater, or 0.90 g/cc or greater, or 0.91 g/cc or greater, or 0.92 g/cc or greater, or 0.93 g/cc or greater, or 0.94 g/cc or greater, or 0.95 g/cc or greater, 0.96 g/cc or greater, while at the same time, 0.97 g/cc or less, or 0.965 g/cc or less, or 0.96 g/cc or less, or 0.95 g/cc or less, or 0.94 g/cc or less, or 0.93 g/cc or less, or 0.92 g/cc or less, or 0.91 g/cc or less, or 0.90 g/cc or less, or 0.89 g/cc or less, or 0.88 g/cc or less, or 0.87 g/cc or less as measured by ASTM D792.

The polyolefin elastomer has a melt flow index (MFI) of 1 gram per ten minutes (g/10 min.) or greater, or 2 g/10 min. or greater, 3 g/10 min. or greater, 4 g/10 min. or greater, 5 g/10 min. or greater, 6 g/10 min. or greater, 7 g/10 min. or greater, 8 g/10 min. or greater, 9 g/10 min. or greater, 10 g/10 min. or greater, or 11 g/10 min. or greater, or 12 g/10 min. or greater, 13 g/10 min. or greater, 14 g/10 min. or greater, 15 g/10 min. or greater, 16 g/10 min. or greater, 17 g/10 min. or greater, 18 g/10 min. or greater, 1 g/10 min. or greater, while at the same time, 20 g/10 min. or less, or 19 g/10 min. or less, or 18 g/10 min. or less, or 17 g/10 min. or less, or 16 g/10 min. or less, or 15 g/10 min. or less, or 14 g/10 min. or less, or 13 g/10 min. or less, or 12 g/10 min. or less, or 11 g/10 min. or less, or 10 g/10 min. or less, or 9 g/10 min. or less, or 8 g/10 min. or less, or 7 g/10 min. or less, or 6 g/10 min. or less, or 5 g/10 min. or less, or 4 g/10 min. or less, or 3 g/10 min. or less, or 2 g/10 min. or less. The MFI is measured in accordance with ASTM D1238 at 190°C and 2.16 kg.

The polymeric composition may comprise 10 wt% or greater, or 11 wt% or greater, or 12 wt% or greater, or 13 wt% or greater, or 14 wt% or greater, or 15 wt% or greater, or 16 wt% or greater, or 17 wt% or greater, or 18 wt% or greater, or 19 wt% or greater, or 20 wt% or greater, or 21 wt% or greater, or 22 wt% or greater, or 23 wt% or greater, or 24 wt% or greater, or 25 wt% or greater, or 26 wt% or greater, or 27 wt% or greater, or 28 wt% or greater, or 29 wt% or greater, while at the same time, 30 wt% or less, or 29 wt% or less, or 28 wt% or less, or 27 wt% or less, or 26 wt% or less, 25 wt% or less, or 24 wt% or less, or 23 wt% or less, or 22 wt% or less, or 21 wt% or less, or 20 wt% or less, or 19 wt% or less, or 18 wt% or less, or 17 wt% or less, or 16 wt% or less, 15 wt% or less, or 14 wt% or less, or 13 wt% or less, or 12 wt% or less, or 11 wt% or less or less of polyolefin elastomer.

### Polypropylene-based Polymer

The polymeric composition comprises the propylene-based polymer. As used herein, a "propylene-based polymer" is a polymer that contains more than 50 wt% polymerized propylene monomer (based on the total amount of polymerizable monomers) and, optionally, may contain one or more comonomers. The terms "propylene-based polymer" and "polypropylene" may be used interchangeably. Propylene-based polymers include propylene homopolymer, and propylene copolymer (meaning units derived from propylene and one or more comonomers). As used herein, a "propylene homopolymer" means a polymer that consists solely of polymerized propylene monomer or is essentially all polymerized propylene monomer. As used herein, "propylene copolymer" means a polymer comprising units derived from polymerized propylene and ethylene and/or one or more other unsaturated comonomers such as a C₄₋₂₀ linear, branched or cyclic α-olefin. Examples of C₄₋₂₀ α-olefins include 1-butene, 4-methyl-1-pentene, 1-hexene, 1-octene, 1-decene, 1-dodecene, 1-tetradecene, 1-hexadecene, and 1-octadecene. For propylene copolymers the comonomer content is 10 wt% or less, or 5 wt% or less, or 3 wt% or less. Common forms of polypropylene known in the art include homopolymer polypropylene (hPP), random copolymer polypropylene (rcPP), impact copolymer polypropylene (hPP + at least one elastomeric impact modifier) (ICPP) or high impact polypropylene (HIPP), high melt strength polypropylene (HMS-PP), isotactic polypropylene (iPP), syndiotactic polypropylene (sPP), and combinations thereof.

The polymeric composition may comprise 1 wt% or greater, or 2 wt% or greater, or 3 wt% or greater, or 4 wt% or greater, or 5 wt% or greater, or 6 wt% or greater, or 7 wt% or greater, or 8 wt% or greater, or 9 wt% or greater, or 10 wt% or greater, or 11 wt% or greater, or 12 wt% or greater, or 13 wt% or greater, or 14 wt% or greater, or 15 wt% or greater, or 16 wt% or greater, or 17 wt% or greater, or 18 wt% or greater, or 19 wt% or greater, while at the same time, 20 wt% or less, or 19 wt% or less, or 18 wt% or less, or 17 wt% or less, or 16 wt% or less, 15 wt% or less, or 14 wt% or less, or 13 wt% or less, or 12 wt% or less, or 11 wt% or less, or 10 wt% or less, or 9 wt% or less, or 8 wt% or less, or 7 wt% or less, or 6 wt% or less, or 5 wt% or less, or 4 wt% or less, or 3 wt% or less, or 2 wt% or less of polypropylene.

The propylene-based polymer has an MFI of 1 g/10 min. or greater, or 2 g/10 min. or greater, 3 g/10 min. or greater, 4 g/10 min. or greater, 5 g/10 min. or greater, 6 g/10 min. or greater, 7 g/10 min. or greater, 8 g/10 min. or greater, 9 g/10 min. or greater, 10 g/10 min. or greater, or 11 g/10 min. or greater, or 12 g/10 min. or greater, 13 g/10 min. or greater, 14 g/10 min. or greater, 15 g/10 min. or greater, 16 g/10 min. or greater, 17 g/10 min. or greater, 18 g/10 min. or greater, 19 g/10 min. or greater, while at the same time, 20 g/10 min. or less, or 19 g/10 min. or less, or 18 g/10 min. or less, or 17 g/10 min. or less, or 16 g/10 min. or less, or 15 g/10 min. or less, or 14 g/10 min. or less, or 13 g/10 min. or less, or 12 g/10 min. or less, or 11 g/10 min. or less, or 10 g/10 min. or less, or 9 g/10 min. or less, or 8 g/10 min. or less, or 7 g/10 min. or less, or 6 g/10 min. or less, or 5 g/10 min. or less, or 4 g/10 min. or less, or 3 g/10 min. or less, or 2 g/10 min. or less. The MFI is measured in accordance with ASTM D1238 at 230° C and 2.16 kg.

Polypropylene homopolymers useful in the practice of this invention are commercially available as H700-12 polypropylene available from either The Dow Chemical Company, Midland, Michigan, USA or Braskem America, Philadelphia, Pennsylvania, USA. Copolymer polypropylenes, including random copolymer polypropylene resins, useful in the practice of this invention are commercially available as DS6D82, 6D83K, and C715-12NHP polypropylene available from The Dow Chemical Company, Midland, Michigan, USA. Impact-modified propylene copolymers useful in the practice of this invention are commercially available as C766-03, C7057-07, C7061-01N, and C706-21NA HP polypropylene from The Dow Chemical Company, Midland, Michigan, USA.

### Crystalline Block Composite

The polymeric composition comprises the crystalline block composite. The term "Crystalline block composite" ("CBC") refers to polymers containing three polymer components:
(i) a crystalline ethylene-based polymer (CEP) having an ethylene content of greater than, or equal to, 90 mol%, based on the total moles of polymerized monomer units in the CEP;
(ii) a crystalline alpha-olefin based polymer (CAOP) having an alpha-olefin content of greater than 90 mol%, based on the total moles of polymerized monomer units in the CAOP; and
(iii) a block copolymer comprising a crystalline ethylene block (CEB) and a crystalline alpha-olefin block (CAOB); and

wherein the crystalline ethylene block has the same or similar melting temperature (Tm) as the CEP of component (i), and
wherein the crystalline alpha-olefin block has the same or similar Tm as the CAOP of component (ii); and
wherein the phrase "same or similar" refers to an absolute Tm differential of ≤5°C as measured using differential scanning calorimetry (DSC) at a temperature ramping rate of 0.1°C to 10°C.

Processes to make CBC, and methods of analyzing CBC are described in, for example, US Patent Application Publication Nos. 2011/0313106, 2011/0313108 and 2011/0313108, all published on 22 December 2011, and in PCT Publication No. WO2014/043522A1. Examples of suitable α-olefins include C3-C10 α-olefins such as C3, C4, C5, C6 and C8 α-olefins. The α-olefin may be propylene.

The "crystalline ethylene-based polymer" ("CEP") contains 90 mol% or greater of the polymerized monomer units in the CEP are ethylene units in which any comonomer content is 10 mol% or less of the polymerized monomer units in the CEP.

The "crystalline alpha-olefin based polymer" ("CAOP") is a crystalline polymer containing polymerized α-olefin units. The polymerized α-olefin unit may be 1-propylene. The polymerized α-olefin unit (e.g., propylene) is present in an amount of 90 mol% or greater, or 93 mol% or greater, or 95 mol% or greater, or 98 mol% or greater, based on the total weight of the crystalline α-olefin based polymer (propylene). The comonomer may be ethylene. The comonomer content in the CAOP is 10 mol% or less. CAOPs with propylene crystallinity have a melting point that is 80°C or greater. The CAOP may comprises all or substantially all propylene units.

Other suitable α-olefin units (in addition to propylene) that may be used in the CAOP are those that contain 4 to 10 carbon atoms, such as 1-butene, 1-hexene, 4-methyl-1-pentene and 1-octene. Suitable diolefins that may be used in the CAOP include isoprene, butadiene, 1,4-pentadiene, 1,4-hexadiene, 1,5-hexadiene, 1,7-octadiene, 1, 9-decadiene, dicyclopentadiene, methylene-norbornene, 5-ethylidene-2-norbornene, or the like, and combinations containing at least one of the foregoing α-olefin units.

The block copolymer of the CBC contains CEB and a crystalline alpha olefin block CAOB. In the CEB, polymerized ethylene is present in an amount 90 mol% or greater based on the total number of moles of the CEB. The CEB polymer may be polyethylene.

The CAOB includes a polypropylene block that is copolymerized with other α-olefin units that contain 4 to 10 carbon atoms. The polypropylene is present in the CAOB in an amount of 90 mol% or greater based on the total number of moles of the CAOB. The comonomer content in the CAOB is 10 mol% or less based on the total number of moles in the CAOB. A CAOB with propylene crystallinity has a melting point that is 80°C or greater. In an embodiment, the CAOB comprises all, or substantially all, propylene units.

The CBC can contain propylene, 1-butene or 4-methyl-1-pentene and one or more comonomers. The CBC can contain, in polymerized form, propylene and ethylene and/or one or more C4-20 α-olefin comonomers, and/or one or more additional copolymerizable comonomers, or the CBC contains 4-methyl-1-pentene and ethylene and/or one or more C4-20 α-olefin comonomers, or the CBC contains 1-butene and ethylene, propylene and/or one or more C5-C20 α-olefin comonomers and/or one or more additional copolymerizable comonomers. Additional suitable comonomers are selected from diolefins, cyclic olefins, and cyclic diolefins, halogenated vinyl compounds, and vinylidene aromatic compounds. The monomer can be propylene and the comonomer can be ethylene.

The CBC can be a propylene-based polymer containing greater than, or equal to, 50 wt% units derived from propylene, based on the total weight of the CBC. Comonomer content in the CBC may be measured using nuclear magnetic resonance (NMR) spectroscopy.

The CBC has an MFI of 1 g/10 min. or greater, or 2 g/10 min. or greater, 3 g/10 min. or greater, 4 g/10 min. or greater, 5 g/10 min. or greater, 6 g/10 min. or greater, 7 g/10 min. or greater, 8 g/10 min. or greater, 9 g/10 min. or greater, 9.5 g/ 10 min. or greater, or 10 g/10 min. or greater, or 11 g/10 min. or greater, or 12 g/10 min. or greater, 13 g/10 min. or greater, 14 g/10 min. or greater, 15 g/10 min. or greater, 16 g/10 min. or greater, 17 g/10 min. or greater, 18 g/10 min. or greater, 19 g/10 min. or greater, while at the same time, 20 g/10 min. or less, or 19 g/10 min. or less, or 18 g/10 min. or less, or 17 g/10 min. or less, or 16 g/10 min. or less, or 15 g/10 min. or less, or 14 g/10 min. or less, or 13 g/10 min. or less, or 12 g/10 min. or less, or 11 g/10 min. or less, or 10 g/10 min. or less, or 9 g/10 min. or less, or 8 g/10 min. or less, or 7 g/10 min. or less, or 6 g/10 min. or less, or 5 g/10 min. or less, or 4 g/10 min. or less, or 3 g/10 min. or less, or 2 g/10 min. or less. The MFI is measured in accordance with ASTM D1238 at 230°C, 2.16 kg.

The CBC can have a weight average molecular weight (Mw) of 10,000 g/mol or greater, or 20,000 g/mol or greater, or 30,000 g/mol or greater, or 40,000 g/mol or greater, or 50,000 g/mol or greater, or 60,000 g/mol or greater, or 70,000 g/mol or greater, or 80,000 g/mol or greater, or 90,000 g/mol or greater, or 100,000 g/mol or greater, or 110,000 g/mol or greater, or 120,000 g/mol or greater, or 130,000 g/mol or greater, or 140,000 g/mol or greater, or 150,000 g/mol or greater, or 160,000 g/mol or greater, or 170,000 g/mol or greater, or 180,000 g/mol or greater, or 190,000 g/mol or greater, while at the same time, 200,00 g/mol or less, or 190,000 g/mol or less, or 180,000 g/mol or less, or 170,000 g/mol or less, or 160,000 g/mol or less, or 150,000 g/mol or less, or 140,000 g/mol or less, or 130,000 g/mol or less, or 120,000 g/mol or less, or 110,000 g/mol or less, or 100,000 g/mol or less, or 90,000 g/mol or less, or 80,000 g/mol or less, or 70,000 g/mol or less, or 60,000 g/mol or less, or 50,000 g/mol or less, or 40,000 g/mol or less, or 30,000 g/mol or less, or 20,000 g/mol or less. The weight-average molecular weight is measured using gel permeation chromatography.

The sum of the weight percents of CEP, CAOP and block copolymer in the CBC equals 100%. The CBC can be 0.5 wt% or greater, or 1 wt% or greater, or 5 wt% or greater, or 10 wt% or greater, or 20 wt% or greater, or 30 wt% or greater, or 40 wt% or greater, or 50 wt% or greater, or 60 wt% or greater, or 70 wt% or greater, or 80 wt% or greater, while at the same time, 90 wt% or less, or 80 wt% or less, or 70 wt% or less, or 60 wt% or less, or 50 wt% or less, or 40 wt% or less, or 30 wt% or less, or 20 wt% or less, or 10 wt% or less of CEP.

The CBC can be 0.5 wt% or greater, or 1 wt% or greater, or 5 wt% or greater, or 10 wt% or greater, or 20 wt% or greater, or 30 wt% or greater, or 40 wt% or greater, or 50 wt% or greater, or 60 wt% or greater, or 70 wt% or greater, or 80 wt% or greater, while at the same time, 90 wt% or less, or 80 wt% or less, or 70 wt% or less, or 60 wt% or less, or 50 wt% or less, or 40 wt% or less, or 30 wt% or less, or 20 wt% or less, or 10 wt% or less of CAOP.

The CBC can be 0.5 wt% or greater, or 1 wt% or greater, or 5 wt% or greater, or 10 wt% or greater, or 20 wt% or greater, or 30 wt% or greater, or 40 wt% or greater, or 50 wt% or greater, or 60 wt% or greater, or 70 wt% or greater, or 80 wt% or greater, while at the same time, 90 wt% or less, or 80 wt% or less, or 70 wt% or less, or 60 wt% or less, or 50 wt% or less, or 40 wt% or less, or 30 wt% or less, or 20 wt% or less, or 10 wt% or less of block copolymer.

The block copolymer of the CBC can contain can be 0.5 wt% or greater, or 1 wt% or greater, or 5 wt% or greater, or 10 wt% or greater, or 20 wt% or greater, or 30 wt% or greater, or 40 wt% or greater, or 50 wt% or greater, or 60 wt% or greater, or 70 wt% or greater, or 80 wt% or greater, while at the same time, 90 wt% or less, or 80 wt% or less, or 70 wt% or less, or 60 wt% or less, or 50 wt% or less, or 40 wt% or less, or 30 wt% or less, or 20 wt% or less, or 10 wt% or less of crystalline ethylene blocks (CEB). The block copolymer of the CBC can contain can be 0.5 wt% or greater, or 1 wt% or greater, or 5 wt% or greater, or 10 wt% or greater, or 20 wt% or greater, or 30 wt% or greater, or 40 wt% or greater, or 50 wt% or greater, or 60 wt% or greater, or 70 wt% or greater, or 80 wt% or greater, while at the same time, 90 wt% or less, or 80 wt% or less, or 70 wt% or less, or 60 wt% or less, or 50 wt% or less, or 40 wt% or less, or 30 wt% or less, or 20 wt% or less, or 10 wt% or less of crystalline alpha-olefin blocks (CAOB).

The CBC can contain (i) a CEP that is a crystalline ethylene/propylene copolymer (CEP); (ii) a CAOP that is an isotactic crystalline propylene homopolymer (iPP); and (iii) a block copolymer containing an iPP block (CAOB) and an ethylene/propylene block (CEB); wherein the block copolymer includes a diblock with the Formula (1):

(CEP)-(iPP) Formula (1).

The polymeric composition may comprise greater than 1 wt%, or 2 wt% or greater, or 3 wt% or greater, or 4 wt% or greater, or 5 wt% or greater, or 6 wt% or greater, or 7 wt% or greater, or 8 wt% or greater, or 9 wt% or greater, or 10 wt% or greater, or 11 wt% or greater, or 12 wt% or greater, or 13 wt% or greater, or 14 wt% or greater, or 15 wt% or greater, or 16 wt% or greater, or 17 wt% or greater, or 18 wt% or greater, or 19 wt% or greater, while at the same time, 20 wt% or less, or 19 wt% or less, or 18 wt% or less, or 17 wt% or less, or 16 wt% or less, 15 wt% or less, or 14 wt% or less, or 13 wt% or less, or 12 wt% or less, or 11 wt% or less, or 10 wt% or less, or 9 wt% or less, or 8 wt% or less, or 7 wt% or less, or 6 wt% or less, or 5 wt% or less, or 4 wt% or less, or 3 wt% or less, or 2 wt% or less of crystalline block composite.

### Maleated Polyolefin Elastomer

The polymeric composition comprises a maleated polyolefin elastomer. As used herein, the term "maleated" indicates an elastomer (e.g., a polyolefin elastomer) that has been modified to incorporate a maleic anhydride monomer. Maleated polyolefin elastomer can be formed by copolymerization of maleic anhydride monomer with ethylene and other monomers (if present) to prepare an interpolymer having maleic anhydride incorporated into the polymer backbone. Additionally, or alternatively, the maleic anhydride can be graft-polymerized to the polyolefin elastomer. The polyolefin elastomer that is maleated may be any of the previously discussed polyolefin elastomers.

The maleated polyolefin elastomer can have a density of 0.86 g/cc or greater, or 0.87 g/cc or greater, or 0.88 g/cc or greater, or 0.89 g/cc or greater, or 0.90 g/cc or greater, or 0.91 g/cc or greater, or 0.92 g/cc or greater, or 0.93 g/cc or greater, or 0.94 g/cc or greater, or 0.95 g/cc or greater, 0.96 g/cc or greater, while at the same time, 0.97 g/cc or less, or 0.965 g/cc or less, or 0.96 g/cc or less, or 0.95 g/cc or less, or 0.94 g/cc or less, or 0.93 g/cc or less, or 0.92 g/cc or less, or 0.91 g/cc or less, or 0.90 g/cc or less, or 0.89 g/cc or less, or 0.88 g/cc or less, or 0.87 g/cc or less as measured by ASTM D792.

The maleated polyolefin elastomer has an MFI of 1 g/10 min. or greater, or 2 g/10 min. or greater, 3 g/10 min. or greater, 4 g/10 min. or greater, 5 g/10 min. or greater, 6 g/10 min. or greater, 7 g/10 min. or greater, 8 g/10 min. or greater, 9 g/10 min. or greater, 10 g/10 min. or greater, or 11 g/10 min. or greater, or 12 g/10 min. or greater, 13 g/10 min. or greater, 14 g/10 min. or greater, 15 g/10 min. or greater, 16 g/10 min. or greater, 17 g/10 min. or greater, 18 g/10 min. or greater, 19 g/10 min. or greater, while at the same time, 20 g/10 min. or less, or 19 g/10 min. or less, or 18 g/10 min. or less, or 17 g/10 min. or less, or 16 g/10 min. or less, or 15 g/10 min. or less, or 14 g/10 min. or less, or 13 g/10 min. or less, or 12 g/10 min. or less, or 11 g/10 min. or less, or 10 g/10 min. or less, or 9 g/10 min. or less, or 8 g/10 min. or less, or 7 g/10 min. or less, or 6 g/10 min. or less, or 5 g/10 min. or less, or 4 g/10 min. or less, or 3 g/10 min. or less, or 2 g/10 min. or less. The MFI is measured in accordance with ASTM D1238 at 190°C and 2.16 kg.

The maleated polyolefin elastomer can have a maleic anhydride content, based on the total weight of the maleated polyolefin elastomer, of 0.25 wt% or greater, or 0.50 wt% or greater, or 0.75 wt% or greater, or 1.00 wt% or greater, or 1.25 wt% or greater, or 1.50 wt% or greater, or 1.75 wt% or greater, or 2.00 wt% or greater, or 2.25 wt% or greater, or 2.50 wt% or greater, or 2.75 wt% or greater, while at the same time, 3.00 wt% or less, 2.75 wt% or less, or 2.50 wt% or less, or 2.25 wt% or less, or 2.00 wt% or less, or 1.75 wt% or less, or 1.50 wt% or less, or 1.25 wt% or less, or 1.00 wt% or less, or 0.75 wt% or less, or 0.5 wt% or less. Maleic anhydride concentrations are determined by Titration Analysis. Titration Analysis is performed by utilizing dried resin and titrates with 0.02N KOH to determine the amount of maleic anhydride. The dried polymers are titrated by dissolving 0.3 to 0.5 grams of maleated polymer in about 150 mL of refluxing xylene. Upon complete dissolution, deionized water (four drops) is added to the solution and the solution is refluxed for 1 hour. Next, 1% thymol blue (a few drops) is added to the solution and the solution is over titrated with 0.02N KOH in ethanol as indicated by the formation of a purple color. The solution is then back-titrated to a yellow endpoint with 0.05N HCl in isopropanol.

The polymeric composition may comprise 1 wt% or greater, or 2 wt% or greater, or 3 wt% or greater, or 4 wt% or greater, or 5 wt% or greater, or 6 wt% or greater, or 7 wt% or greater, or 8 wt% or greater, or 9 wt% or greater, while at the same time, 10 wt% or less, or 9 wt% or less, or 8 wt% or less, or 7 wt% or less, or 6 wt% or less, or 5 wt% or less, or 4 wt% or less, or 3 wt% or less, or 2 wt% or less of maleated polyolefin elastomer.

An example of a suitable commercially available maleated polyolefin elastomer is AMPLIFY^{™} GR216 available from The Dow Chemical Company, Midland, MI, USA.

### Halogen-Free Flame Retardant (HFFR) Filler

The halogen-free flame retardant of the polymeric composition can inhibit, suppress, or delay the production of flames. Examples of the halogen-free flame retardants suitable for use in compositions according to this disclosure include, but are not limited to, metal hydroxides, red phosphorous, silica, alumina, aluminum hydroxide, magnesium dihydroxide, aluminum trihydrate, aluminum hydroxide, titanium oxide, carbon nanotubes, talc, clay, organo-modified clay, calcium carbonate, zinc borate, antimony trioxide, wollastonite, mica, ammonium octamolybdate, frits, hollow glass microspheres, intumescent compounds, expanded graphite, and combinations thereof. In an embodiment, the halogen-free flame retardant can be selected from the group consisting of aluminum hydroxide, magnesium hydroxide, calcium carbonate, and combinations thereof. The halogen-free flame retardant can optionally be surface treated (coated) with a saturated or unsaturated carboxylic acid having 8 to 24 carbon atoms, or 12 to 18 carbon atoms, or a metal salt of the acid. Exemplary surface treatments are described in US 4,255,303, US 5,034,442, US 7,514,489, US 2008/0251273, and WO 2013/116283. Alternatively, the acid or salt can be merely added to the composition in like amounts rather than using the surface treatment procedure. Other surface treatments known in the art may also be used including silanes, titanates, phosphates and zirconates.

Commercially available examples of halogen-free flame retardants suitable for use in compositions according to this disclosure include, but are not limited to, APYRAL^{™} 40CD aluminum hydroxide available from Nabaltec AG, MAGNIFIN^{™} H5 magnesium hydroxide available from Magnifin Magnesiaprodukte GmbH & Co KG, and combinations thereof.

The polymeric composition may comprise HFFR filler in an concentration of 40 wt% or greater, or 42 wt% or greater, or 44 wt% or greater, or 46 wt% or greater, or 48% or greater, or 50 wt% or greater, or 52 wt% or greater, or 54 wt% or greater, or 56 wt% or greater, or 58% or greater, or 60 wt% or greater, or 62 wt% or greater, or 64 wt% or greater, or 66 wt% or greater, or 68% or greater, or 70 wt% or greater, or 72 wt% or greater, or 74 wt% or greater, or 76 wt% or greater, or 78% or greater, while at the same time, 80 wt% or less, or 78 wt% or less, or 76 wt% or less, or 74 wt% or less, or 72 wt% or less, or 70 wt% or less, or 68 wt% or less, or 66 wt% or less, or 64 wt% or less, or 62 wt% or less, or 60 wt% or less, or 58 wt% or less, or 56 wt% or less, or 54 wt% or less, or 52 wt% or less, or 50 wt% or less, or 48 wt% or less, or 46 wt% or less, or 44 wt% or less, or 42 wt% or less based on the weight of the polymeric composition.

The HFFR filler may have a D₅₀ particle size of 0.5 µm or greater, or 0.6 µm or greater, or 0.7 µm or greater, or 0.8 µm or greater, or 0.9 µm or greater, or 1.0 µm or greater, or 1.1 µm or greater, or 1.2 µm or greater, or 1.3 µm or greater, or 1.4 µm or greater, or 1.5 µm or greater, or 1.6 µm or greater, or 1.7 µm or greater, or 1.8 µm or greater, or 1.9 µm or greater, while at the same time, 2.0 µm or less, or 1.9 µm or less, or 1.8 µm or less, or 1.7 µm or less, or 1.6 µm or less, or 1.5 µm or less, or 1.4 µm or less, or 1.3 µm or less, or 1.2 µm or less, or 1.1 µm or less, or 1.0 µm or less, or 0.9 µm or less, or 0.8 µm or less, or 0.7 µm or less, or 0.6 µm or less. Particle size of the HFFR filler may be determined using static laser light scattering.

### Additives

The polymeric composition may comprise additional additives in the form of antioxidants, cross-linking co-agents, cure boosters and scorch retardants, processing aids, coupling agents, ultraviolet stabilizers (including UV absorbers), antistatic agents, additional nucleating agents, slip agents, lubricants, viscosity control agents, tackifiers, anti-blocking agents, surfactants, extender oils, acid scavengers, flame retardants and metal deactivators. The polymeric composition may comprise from 0.01 wt% to 10 wt% of one or more of the additional additives.

The UV light stabilizers may comprise hindered amine light stabilizers ("HALS") and UV light absorber ("UVA") additives. Representative UVA additives include benzotriazole types such as TINUVIN 326^{™} light stabilizer and TINUVIN 328^{™} light stabilizer commercially available from Ciba, Inc. Blends of HAL's and UVA additives are also effective.

The antioxidants may comprise hindered phenols such as tetrakis[methylene(3,5-di-tert-butyl-4-hydroxyhydro-cinnamate)]methane; bis[(beta-(3,5-ditert-butyl-4-hydroxybenzyl) methylcarboxyethyl)]-sulphide, 4,4'-thiobis(2-methyl-6-tert-butylphenol), 4,4'-thiobis(2-tert-butyl-5-methylphenol), 2,2'-thiobis(4-methyl-6-tert-butylphenol), and thiodiethylene bis(3,5-di-tert-butyl-4-hydroxy)-hydrocinnamate; phosphites and phosphonites such as tris(2,4-di-tert-butylphenyl)phosphite and di-tert-butylphenyl-phosphonite; thio compounds such as dilaurylthiodipropionate, dimyristylthiodipropionate, and distearylthiodipropionate; various siloxanes; polymerized 2,2,4-trimethyl-1,2-dihydroquinoline, n,n'-bis(1,4-dimethylpentyl-p-phenylenediamine), alkylated diphenylamines, 4,4'-bis(alpha, alphadimethylbenzyl)diphenylamine, diphenyl-p-phenylenediamine, mixed di-aryl-p-phenylenediamines, and other hindered amine anti-degradants or stabilizers.

The processing aids may comprise metal salts of carboxylic acids such as zinc stearate or calcium stearate; fatty acids such as stearic acid, oleic acid, or erucic acid; fatty amides such as stearamide, oleamide, erucamide, or N,N'-ethylene bis-stearamide; polyethylene wax; oxidized polyethylene wax; polymers of ethylene oxide; copolymers of ethylene oxide and propylene oxide; vegetable waxes; petroleum waxes; non-ionic surfactants; silicone fluids and polysiloxanes.

### Compounding and Cable Formation

The components of the polymeric composition can be added to a batch or continuous mixer for melt blending to form a melt-blended composition. The components can be added in any order or first preparing one or more masterbatches for blending with the other components. The melt blending may be conducted at a temperature above the highest melting polymer. The melt-blended composition is then delivered to an extruder or an injection-molding machine or passed through a die for shaping into the desired article, or converted to pellets, tape, strip or film or some other form for storage or to prepare the material for feeding to a next shaping or processing step. Optionally, if shaped into pellets or some similar configuration, then the pellets, etc. can be coated with an anti-block agent to facilitate handling while in storage.

Examples of compounding equipment used include internal batch mixers, such as a BANBURY^{™} or BOLLING^{™} internal mixer. Alternatively, continuous single, or twin screw, mixers can be used, such as FARRELL^{™} continuous mixer, a WERNER^{™} and PFLEIDERER^{™} twin screw mixer, or a BUSS^{™} kneading continuous extruder. The type of mixer utilized, and the operating conditions of the mixer, will affect properties of the composition such as viscosity, volume resistivity, and extruded surface smoothness.

The polymeric composition can be disposed on or positioned around a conductor to form a cable. As used herein, a "conductor" is one or more wire(s), or one or more fiber(s), for conducting heat, light, and/or electricity. The conductor may be a single-wire/fiber or a multiwire/fiber and may be in strand form or in tubular form. Non-limiting examples of suitable conductors include carbon and various metals, such as silver, gold, copper, and aluminum. The conductor may also be an optical fiber made from either glass or plastic. The polymeric composition may be used as a protective sheath to form a cable. The polymeric composition is then extruded on to the conductor to form the cable. The polymeric composition may be

### Polymeric Composition Properties

The polymeric composition may exhibit a tensile strength of 10.0 MPa or greater, or 10.5 MPa or greater, or 11.0 MPa or greater, or 11.5 MPa or greater, or 12.0 MPa or greater, or 12.5 MPa or greater, or 13.0 MPa or greater, or 13.5 MPa or greater, or 14.0 MPa or greater, or 14.5 MPa or greater, or 15.0 MPa or greater, or 15.5 MPa or greater, or 16.0 MPa or greater, or 16.5 MPa or greater, or 17.0 MPa or greater, or 17.5 MPa or greater, or 18.0 MPa or greater, or 18.5 MPa or greater, or 19.0 MPa or greater, or 19.5 MPa or greater, while at the same time, 20.0 MPa or less, or 19.5 MPa or less, or 19.0 MPa or less, or 18.5 MPa or less, or 18.0 MPa or less, or 17.5 MPa or less, or 17.0 MPa or less, or 16.5 MPa or less, or 16.0 MPa or less, or 15.5 MPA or less, or 15.0 MPa or less, or 14.5 MPa or less, or 14.0 MPa or less, or 13.5MPa or less, or 13.0 MPa or less, or 12.5 MPa or less, or 12.0 MPa or less, or 11.5 MPa or less, or 11.0 MPa or less, or 10.5 MPA or less. The tensile strength is determined according to the procedure described in the Test Methods section, below.

The polymeric composition may exhibit an elongation at break of 70% or greater, or 75% or greater, or 80% or greater, or 85% or greater, or 90% or greater, or 95% or greater, or 100% or greater, or 105% or greater, or 110% or greater, or 115% or greater, or 120% or greater, or 125% or greater, while at the same time, 130% or less, or 125% or less, or 120% or less, or 115% or less, or 110% or less, or 105% or less, or 100% or less, or 95% or less, or 90% or less, or 85% or less, or 80% or less, or 75% or less. The elongation at break modulus is determined according to the procedure described in the Test Methods section, below.

The polymeric composition may exhibit a flexural modulus of 200 MPa or greater, or 210 MPa or greater, or 220 MPa or greater, or 230 MPa or greater, or 240 MPa or greater, or 250 MPa or greater, or 260 MPa or greater, or 270 MPa or greater, or 280 MPa or greater, or 290 MPa or greater, or 300 MPa or greater, or 310 MPa or greater, or 320 MPa or greater, or 330 MPa or greater, or 340 MPa or greater, while at the same time, 350 MPa or less, or 340 MPa or less, or 330 MPa or less, or 320 MPa or less, or 310 MPa or less, or 300 MPa or less, or 290 MPa or less, or 280 MPa or less, or 270 MPa or less, or 260 MPA or less, or 250 MPa or less, or 240 MPa or less, or 230 MPa or less, or 220 MPa or less, or 210 MPa or less. The flexural modulus is determined according to the procedure described in the Test Methods section, below.

The polymeric composition may exhibit a MFI of 1.0 g/min. or greater, or 1.1 g/min. or greater, or 1.2 g/min. or greater, or 1.3 g /min. or greater, or 1.4 g/min. or greater, or 1.5 g/min. or greater, or 1.6 g/min. or greater, or 1.7 g /min. or greater, or 1.8 g/min. or greater, or 1.9 g/min. or greater, 2.0 g/min. or greater, or 2.1 g/min. or greater, or 2.2 g/min. or greater, or 2.3 g /min. or greater, or 2.4 g/min. or greater, or 2.5 g/min. or greater, or 2.6 g/min. or greater, or 2.7 g /min. or greater, or 2.8 g/min. or greater, or 2.9 g/min. or greater, while at the same time, 3.0 g/min. or less, or 2.9 g/min. or less, or 2.8 g/min. or less, or 2.7 g/min. or less, or 2.6 g/min. or less, or 2.5 g/min. or less, or 2.4 g/min. or less, or 2.3 g/min. or less, or 2.2 g/min. or less, or 2.1 g/min. or less, or 2.0 g/10min. or less, or 1.9 g/min. or less, or 1.8 g/min. or less, or 1.7 g/min. or less, or 1.6 g/min. or less, or 1.5 g/min. or less, or 1.4 g/min. or less, or 1.3 g/min. or less, or 1.2 g/min. or less, or 1.1 g/min. or less. The MFI is determined according to the procedure described in the Test Methods section, below.

The polymeric composition exhibits a hot knife indentation value of 50% or less, or 45% or less, or 40% or less, or 35% or less, or 30% or less, or 25% or less, or 20% or less, or 15% or less, or 10% or less, or 15% or less, or 10% or less, or 5% or less. Hot knife indentation values are measured according to DIN EN 60811-3-1 at a 1.9 mm thickness.

The polymeric composition exhibits an ESCR value of 1000 hours or greater, or 1100 hours or greater, or 1200 hours or greater, or 1300 hours or greater, or 1400 hours or greater, or 1500 hours or greater, or 1600 hours or greater, or 1700 hours or greater, or 1800 hours or greater, or 1900 hours or greater, or 2000 hours or greater. ESCR values are measured according to ASTM D1693.

### Examples

### Materials

The following materials are employed in the Examples, below.

LLDPE is a linear low-density polyethylene having a density of 0.92 g/cc and an MFI of 1g/10 min (190°C/21.6 kg), an example of which is commercially available as DOWLEX^{™} 2045G Polyethylene Resin from The Dow Chemical Company, Midland, MI, USA.

Polypropylene (PP) is a polypropylene homopolymer having a melt flow index of 12 g./10 minutes (230°C, 2.16 kg) and a melting temperature of 160 °C, an example of which is commercially available as PP H700-12 polypropylene from Braskem, São Paulo, Brazil.

POE is a polyolefin elastomer of ethylene and butylene having a melt flow index of 4.5 g/10 minutes (190°C/21.6 kg), a density of 0.89 g/cc, and a melting temperature of 80°C, an example of which is commercially available under the tradename SEC 39001 from The Dow Chemical Company, Midland, MI, USA.

CBC is a crystalline block copolymer that is a polypropylene and polyethylene diblock composite. As used herein the polypropylene and polyethylene diblock composite is a composite of (i) a CEP that is a crystalline ethylene/propylene copolymer; (ii) a CAOP that is an isotactic crystalline propylene homopolymer (iPP); and (iii) a block copolymer containing an iPP block (CAOB) and an ethylene/propylene block (CEB) with the properties provided in Table 1:

**Table 1:**

| | **MFI (230°C/2.16 kg) (g/10 min)** | **wt% PP** | **Mw (kg/mol)** | **Mw/Mn** | **Total wt % C₂ (NMR)** | **Tm (°C) Peak 1/ Peak 2** | **Tc (°C)** |
|---|---|---|---|---|---|---|---|
| CBC | 9.5 | 19.9 | 104 | 2.73 | 47.6 | 108/130 | 88 |

- Wt% PP - Weight percentage propylene polymer in the CBC as measured by high temperature liquid chromatography.
- Mw - the weight average molecular weight of the CBC in kg/mol as determined by gel permeation chromatography as described above.
- Mw/Mn - the molecular weight distribution of the CBC as determined by gel permeation chromatography as described above.
- Total wt% C₂ - the weight percentage of ethylene in the CBC as determined by C13 nuclear magnetic resonance spectroscopy, the balance being propylene.
- Tm (°C) Peak 1 (Peak 2) - Peak melting temperature as determined by the second heating curve from DSC. Peak 1 refers to the melting of CEB / CEP (for CBC), or EB / EP for (BC), whereas Peak 2 refers to the melting of CEB or CEP.
- Tc (°C) - Peak crystallization temperature as determined by DSC cooling scan.

Suitable processes useful in producing CBC may be found, for example, in U.S. Patent Application Publication No. 2008/0269412. In particular, the polymerization is desirably carried out as a continuous polymerization, preferably a continuous, solution polymerization, in which catalyst components, monomers, and optionally solvent, adjuvants, scavengers, and polymerization aids are continuously supplied to one or more reactors or zones and polymer product continuously removed therefrom. Within the scope of the terms "continuous" and "continuously" as used in this context are those processes in which there are intermittent additions of reactants and removal of products at small regular or irregular intervals, so that, over time, the overall process is substantially continuous. The chain shuttling agent(s) may be added at any point during the polymerization including in the first reactor or zone, at the exit or slightly before the exit of the first reactor, or between the first reactor or zone and the second or any subsequent reactor or zone. Due to the difference in monomers, temperatures, pressures or other difference in polymerization conditions between at least two of the reactors or zones connected in series, polymer segments of differing composition such as comonomer content, crystallinity, density, tacticity, regio-regularity, or other chemical or physical difference, within the same molecule are formed in the different reactors or zones. The size of each segment or block is determined by continuous polymer reaction conditions, and preferably is a most probable distribution of polymer sizes. Exemplary catalysts and catalyst precursors for use to from the crystalline block composite include metal complexes such as disclosed in International Publication No WO 2005/090426.

MAH-g-POE is a malic anhydride grafted polyolefin elastomer having a density of 0.87 g/cc and a melt flow index of 1.25 g/10 min., an example of which is commercially available under the tradename AMPLIFY^{™} GR 216 from The Dow Chemical Company, Midland, MI, USA.

HFFR is magnesium hydroxide, an example of which is commercially available under the tradename MAGNIFIN^{™} H-5MV from the Albemarle Corporation Charlotte, NC, USA.

Stabilizer is a blend of 4 wt% TiO₂, 0.1 wt% of IRGASTAB^{™} FS301FF stabilizer and 0.75 wt% of CHIMASSORB^{™} 2020 light stabilizing additive in a balance of VERSIFY^{™} 2300 propylene-ethylene copolymers. IRGASTAB^{™} and CHIMASSORB^{™} are commercially available from BASF, Ludwigshafen, Germany while VERSIFY^{™} 2300 is available from The Dow Chemical Company, Midland, MI, USA.

PA is a processing aid comprising an ultra-high molecular weight siloxane polymer commercially available as MB50-313^{™} masterbatch available from Dow Corning, Midland Michigan, USA.

### Sample Preparation

Prepare Inventive Examples ("IE") and Comparative Examples ("CE") according to the following steps. Load each of the materials of the IE and CE into a BUSS^{™} Kneader, model MDK/E 46. Mix the materials to homogenize the CE and IE samples. Compression mold samples of the IE and CE to form 2 mm plaques for testing.

### Test Methods

Employ the following test methods to determine the properties of the compression molded plaques of IE and CE samples, below.

### Tensile Strength & Elongation at Break

Test tensile strength and elongation at break of the samples according to IEC 60811-512 in an INSTRON^{™} 4202 tester at a speed of 25 mm/min., a preload of 3 newtons (N), a yield sensitivity of 1%, a grip distance of 50 mm, and a 10,000 N load cell.

### Flex Modulus

Place compression molded samples in a flex fixture of an INSTRON^{™} 4202 tester for 3-point deflection using a 5.08 cm span and crosshead speed of 0.127cm/min. Determine the flex modulus at the maximum flexural stress sustained during the test according to ISO 178.

### MFI

Measure melt flow index of samples at 190°C and 21.6 kg in accordance with ASTM D1238.

### Hot Knife Indentation

Measure hot knife indentation value according to DIN EN 60811-3-1 on a 1.9 mm thickness sample.

### ESCR

Measure ESCR values of the samples according to ASTM D1693.

### Results

Table 2 provides composition data for CE1-CE4 in weight percent.

**Table 2:**

| **Example** | **POE** | **LLDPE** | **PP** | **CBC** | **MAH-g-POE** | **Stabilizer** | **PA** | **HFFR** | **Total** |
|---|---|---|---|---|---|---|---|---|---|
| CE1 | 22 | 10 | 0 | 0 | 5 | 1 | 2 | 60 | 100 |
| CE2 | 22 | 0 | 10 | 0 | 5 | 1 | 2 | 60 | 100 |
| CE3 | 22 | 0 | 10 | 0 | 5 | 1 | 2 | 60 | 100 |
| CE4 | 21.5 | 0 | 9.5 | 1 | 5 | 1 | 2 | 60 | 100 |
| IE1 | 16 | 0 | 8 | 8 | 5 | 1 | 2 | 60 | 100 |
| IE2 | 20 | 0 | 8 | 4 | 5 | 1 | 2 | 60 | 100 |
| IE3 | 18 | 0 | 6 | 8 | 5 | 1 | 2 | 60 | 100 |
| IE4 | 16 | 0 | 4 | 12 | 5 | 1 | 2 | 60 | 100 |

Table 3 provides composition and mechanical property data for IE1-IE4.

**Table 3:**

| **Example** | **Tensile Strength (MPa)** | **Elongation at Break (%)** | **Flex Modulus (MPa)** | **MFI (dg/min)** | **Hot Knife Indentation (%)** | **ESCR (Hours)** |
|---|---|---|---|---|---|---|
| CE1 | 12.4 | 130 | N/A | 18.7 | 11 | 4 |
| CE2 | 9.6 | 40 | N/A | 24.9 | 27 | 2 |
| CE3 | 10 | 56 | 270 | 16.8 | 23 | 0 |
| CE4 | 10.8 | 54 | 340 | 15 | 16 | 0 |
| IE1 | 12.3 | 70 | N/A | 27.1 | 9 | >1419 |
| IE2 | 12.4 | 91 | 280 | 23.6 | 18 | >2000 |
| IE3 | 13.3 | 100 | 285 | 18.5 | 18 | >2000 |
| IE4 | 13.5 | 121 | 300 | 17.1 | 10 | >2000 |

CE1-CE4 are compositionally similar in that CE1-CE4 comprise 1 wt% or less of crystalline block composite. As evident from the mechanical property data provided in Table 3, CE1-CE4 exhibit acceptable cable jacket properties in some properties but do not provide a balance of acceptable properties in every mechanical property category as IE1-IE4 do. For example, although CE1, CE3 and CE4 meet the cable jacket properties of 10 MPa tensile strength and a hot knife indentation of less than 50%, they fail to meet 70% elongation at break or an ESCR value of 1000 hours. Similarly, while CE2 nearly meets the 10 MPa tensile strength and has a hot knife indentation of less than 50%, CE2 fails to meet 70% elongation at break or an ESCR value of 1000 hours.

IE1-IE4 are compositionally similar in that IE1-IE4 comprise greater than 1 wt% of crystalline block composite. Specifically, IE1-IE4 each include 4 wt% or greater of crystalline block composite and specifically a propylene and polyethylene copolymer. As evident from the mechanical property data provided in Table 3, IE1-IE4 exhibit acceptable cable jacket properties in all mechanical property categories. As can be seen, each one of IE1-IE4 meet or exceed the cable jacket properties of 10 MPa tensile strength, 70% elongation at break, hot knife indentation of less than 50%, and an ESCR value of 1000 hours.

## Claims

1. A polymeric composition, comprising in weight percent of the polymeric composition:
(a) 10 wt% to 30 wt% of a polyolefin elastomer;
(b) 1 wt% to 20 wt% of a polypropylene-based polymer;
(c) greater than 1 wt% to 20 wt% of a crystalline block composite;
(d) 1 wt% to 10 wt% of a maleated polyolefin elastomer; and
(e) 40 wt% to 80 wt% of a halogen free flame-retardant filler.

2. The polymeric composition of claim 1, wherein the polymeric composition comprises 50 wt% to 70 wt% of the halogen free flame-retardant filler and the halogen free flame-retardant filler is magnesium hydroxide.

3. The polymeric composition of claim 1, wherein the maleated polyolefin elastomer is malic anhydride grafted polyolefin elastomer, further wherein the polymeric composition comprises from 3 wt% to 7 wt% malic anhydride grafted polyolefin elastomer.

4. The polymeric composition of claim 1, wherein the polymeric composition comprises 15 wt% to 25 wt% of the polyolefin elastomer, further wherein the polyolefin elastomer has a density ranging from 0.87 g/cm³ to 0.91 g/cm³ as measured according to ASTM D792.

5. The polymeric composition of claim 1, wherein the polymeric composition comprises 4 wt% to 10 wt% of a polypropylene-based polymer.

6. The polymeric composition of claim 1, wherein the polymeric composition comprises 2 wt% to 20 wt% of the crystalline block composite.

7. The polymeric composition of claim 5, wherein the polymeric composition comprises 4 wt% to 12 wt% of the crystalline block composite.

8. The polymeric composition of claim 7, wherein the crystalline block composite is a polypropylene and polyethylene diblock composite.

9. The polymeric composition of claim 8, wherein the polypropylene and polyethylene diblock composite has a density ranging from 0.89 g/cm³ to 0.92 g/cm³ as measured according to ASTM D792.

10. The polymeric composition of claim 8, wherein the polypropylene and polyethylene diblock composite has a melt flow index from 8 g/10 min. to 12 g/10 min. at 230°C and 2.16 kg.

11. A cable, comprising:
a conductor; and
the polymeric composition of any of claims 1-10 positioned around the conductor.

## Patentansprüche

1. Polymerzusammensetzung, umfassend in Gewichtsprozent der Polymerzusammensetzung:
(a) zu 10 Gew.-% bis 30 Gew.-% ein Polyolefinelastomer;
(b) zu 1 Gew.-% bis 20 Gew.-% ein polypropylenbasiertes Polymer;
(c) zu mehr als 1 Gew.-% bis 20 Gew.-% einen kristallinen Blockverbundstoff;
(d) zu 1 Gew.-% bis 10 Gew.-% ein maleatiertes Polyolefinelastomer; und
(e) zu 40 Gew.-% bis 80 Gew.-% einen halogenfreien flammhemmenden Füllstoff.

2. Polymerzusammensetzung nach Anspruch 1, wobei die Polymerzusammensetzung zu 50 bis 70 Gew.-% den halogenfreien flammhemmenden Füllstoff umfasst und der halogenfreie flammhemmende Füllstoff Magnesiumhydroxid ist.

3. Polymerzusammensetzung nach Anspruch 1, wobei das maleatierte Polyolefinelastomer ein mit Apfelsäureanhydrid gepfropftes Polyolefinelastomer ist, ferner wobei die Polymerzusammensetzung zu von 3 bis 7 Gew.-% mit Äpfelsäureanhydrid gepfropftes Polyolefinelastomer umfasst.

4. Polymerzusammensetzung nach Anspruch 1, wobei die Polymerzusammensetzung zu 15 bis 25 Gew.-% das Polyolefinelastomer umfasst, ferner wobei das Polyolefinelastomer eine Dichte im Bereich von 0,87 g/cm³ bis 0,91 g/cm³ aufweist; gemessen gemäß ASTM D792.

5. Polymerzusammensetzung nach Anspruch 1, wobei die Polymerzusammensetzung zu 4 Gew.-% bis 10 Gew.-% ein polypropylenbasiertes Polymer umfasst.

6. Polymerzusammensetzung nach Anspruch 1, wobei die Polymerzusammensetzung zu 2 Gew.-% bis 20 Gew.-% den kristallinen Blockverbundstoff umfasst.

7. Polymerzusammensetzung nach Anspruch 5, wobei die Polymerzusammensetzung zu 4 Gew.-% bis 12 Gew.-% den kristallinen Blockverbundstoff umfasst.

8. Polymerzusammensetzung nach Anspruch 7, wobei der kristalline Blockverbundstoff ein Diblockverbundstoff aus Polypropylen und Polyethylen ist.

9. Polymerzusammensetzung nach Anspruch 8, wobei der Polypropylen- und Polyethylen-Diblockverbundstoff eine Dichte im Bereich von 0,89 g/cm³ bis 0,92 g/cm³ aufweist, gemessen gemäß ASTM D792.

10. Polymerzusammensetzung nach Anspruch 8, wobei der Polypropylen- und Polyethylen-Diblockverbundstoff einen Schmelzflussindex von 8 g/10 min bis 12 g/10 min bei 230 °C und 2,16 kg aufweist.

11. Kabel, umfassend:
einen Leiter; und
die Polymerzusammensetzung nach einem der Ansprüche 1 bis 10, die um den Leiter herum angeordnet ist.

## Revendications

1. Composition polymère, comprenant en pourcentage de poids de la composition polymère :
(a) de 10 % en poids à 30 % en poids d'un élastomère de polyoléfine ;
(b) de 1 % en poids à 20 % en poids d'un polymère à base polypropylène ;
(c) plus de 1 % en poids à 20 % en poids d'un bloc composite cristallin ;
(d) de 1 % en poids à 10 % en poids d'un élastomère polyoléfinique maléate ; et
(e) de 40 % en poids à 80 % en poids d'une charge ignifuge sans halogène.

2. Composition polymère selon la revendication 1, dans laquelle la composition polymère comprend de 50 % en poids à 70 % en poids de la charge ignifuge sans halogène et la charge ignifuge sans halogène est de l'hydroxyde de magnésium.

3. Composition polymère selon la revendication 1, dans laquelle l'élastomère de polyoléfine maléaté est un élastomère de polyoléfine greffé à l'anhydride malique, et dans laquelle la composition polymère comprend de 3 % en poids à 7 % en poids d'élastomère de polyoléfine greffé à l'anhydride malique.

4. Composition polymère selon la revendication 1, dans laquelle la composition polymère comprend de 15 % en poids à 25 % en poids d'élastomère de polyoléfine, dans laquelle l'élastomère de polyoléfine a une densité comprise entre 0,87 g/cm³ et 0,91 g/cm³, comme mesurée selon la norme ASTM D792.

5. Composition polymère selon la revendication 1, dans laquelle la composition polymère comprend de 4 % en poids à 10 % en poids d'un polymère à base de polypropylène.

6. Composition polymère selon la revendication 1, dans laquelle la composition polymère comprend de 2 % en poids à 20 % en poids du composite bloc cristallin.

7. Composition polymère selon la revendication 5, dans laquelle la composition polymère comprend de 4 % en poids à 12 % en poids du composite bloc cristallin.

8. Composition polymère selon la revendication 7, dans laquelle le composite de bloc cristallin est un composite de dibloc de polypropylène et de polyéthylène.

9. Composition polymère selon la revendication 8, dans laquelle le composite dibloc de polypropylène et de polyéthylène a une densité comprise entre 0,89 g/cm³ et 0,92 g/cm³, comme mesurée selon la norme ASTM D792.

10. Composition polymère selon la revendication 8, dans laquelle le composite dibloc de polypropylène et de polyéthylène a un indice de fluidité à chaud allant de 8 g/10 min. à 12 g/10 min. à 230 °C et 2,16 kg.

11. Câble comprenant :
un conducteur ; et
la composition polymère selon l'une quelconque des revendications 1 à 10 positionnée autour du conducteur.
